Europäisches Patentamt

European Patent Office

Office européen des brevets

(11) Veröffentlichungsnummer: **0 303 194**
**A1**

## (12) EUROPÄISCHE PATENTANMELDUNG

(21) Anmeldenummer: 88112750.0

(22) Anmeldetag: 05.08.88

(51) Int. Cl.⁴: **F16B 12/50 , A47B 47/03**

(30) Priorität: 11.08.87 DE 3726631

(43) Veröffentlichungstag der Anmeldung:
15.02.89 Patentblatt 89/07

(84) Benannte Vertragsstaaten:
AT BE CH DE ES FR GB GR IT LI NL SE

(71) Anmelder: Smitka, Günter
FriedenstraBe 9
D 5860 Iserlohn 7(DE)

(72) Erfinder: Smitka, Günter
FriedenstraBe 9
D 5860 Iserlohn 7(DE)

(74) Vertreter: Patentanwälte Wenzel & Kalkoff
Flasskuhle 6 Postfach 2448
D-5810 Witten(DE)

(54) Profilstange, Eckverbinder sowie Eckverbindung.

(57) Die Erfindung betrifft eine Profilstange (10) und
einen Eckverbinder (1) sowie eine aus diesen Teilen
herstellbare Eckverbindung. Die Profilstange (10)
weist unter einem Winkel zueinander stehende freie
Schenkel (14) mit schlitzförmigen Aufnahmen (13)
auf, in die ein entsprechender Arm (2) des drei oder
mehr Arme (2) aufweisenden Eckverbinders (1) mit
zwei freien Schenkeln (3) eingreift. Die frei zugänglichen Schenkel (3) der Profilstangen (10) und Arme
(2) lassen eine einfache und stabile Befestigung und
Lagesicherung z.B. durch Punktschweißen zu.

FIG.5

EP 0 303 194 A1

## Profilstange, Eckverbinder, sowie Eckverbindung

Die Erfindung betrifft eine Profilstange,einen Eckverbinder sowie eine damit herstellbare Eckverbindung zur Bildung von Gestellen, Gehäusen und Regalen, wobei an jedem Arm der drei oder mehr Arme eines Eckverbinders eine Profilstange befestigbar ist.

Die Nachteile bekannter Profilstangen,Eckverbinder und damit herstellbarer Eckverbindungen sind vor allem eine unzureichende Befestigung der Eckverbindung sowie die gewöhnlich teure Herstellung dieser Eckverbinder. So zeigt das DE-GM 71 49 166 einen massiven Eckverbinder, bei den mit Hilfe einer Schraube und einer gesonderten Klammer eine Profilstange angeschraubt wird. Aus dem DE-GM 73 03 450 sind hohle Arme des Eckverbinders zum Aufschrauben der Profilstangen bekannt. Die DE-OS 27 31 318 zeigt eine Eckverbindung mit Preßsitz. Auch Eckverbinder aus mehrlagig gefaltetem Blech sind bekannt, wobei die Befestigung der Profilstange mit Hilfe von Blechschrauben erfolgt.

Wegen der Instabilität der mit bekannten Eckverbindern und Profilstangen herstellbaren Eckverbindungen sowie wegen der hohen Herstellungskosten wird heute allgemein auf solche Profilverbindungen für Gehäuse, Gestelle oder dergleichen verzichtet. Statt dessen werden Profilstangen an den Ecken häufig nur miteinander verschweißt. Eine solche Verbindung ist zwar stabil, aber in der Herstellung teuer und nicht zerlegbar, so daß viel Platz für Lagerung beansprucht wird.

Die Aufgabe der Erfindung besteht deshalb darin, eine Profilstange, einen Eckverbinder und eine daraus herstellbare Eckverbindung so zu gestalten, daß ein Gehäuserahmen, ein Gestell oder dergleichen stabil sowie auch wirtschaftlich herstellbar ist, und zwar auch bei Gehäusen und Gestellen mit großer Abmessung und mit Einbauten von hohem Gewicht.

Zur Lösung dieser Aufgabe wird eine Profilstange und ein Eckverbinder sowie eine daraus herstellbare Eckverbindung gemäß Anspruch 1 vorgeschlagen.

Die Erfindung löst nicht nur die gestellte Aufgabe, sondern sie schafft vor allem auch eine freie Zugänglichkeit zum Ansetzen einer Punktschweißzange zwecks Lagesicherung zwischen der Profilstange und dem Eckverbinder. Dieser Vorteil, der sich auch bei Schraubverbindungen günstig auswirkt, wird durch Bildung einer Innenecke an den freien Schenkeln der Profilstange und an den Armen des Eckverbinders ermöglicht. Zusätzlich zu der Befestigung der Arme des Eckverbinders in den vorzugsweise schlitzförmigen Aufnahmen der Profilstange mit der Möglichkeit einer Punktschweißung kann sich zwischen den freien Schenkeln jedes Arms des Eckverbinders und der Profilschenkel ein schräger Abschnitt befinden, so daß an dieser Stelle eine einfache Schraubverbindung angebracht werden kann. Sehr vorteilhaft ist die Möglichkeit der Herstellung des Eckverbinders als ein einziges, massives Preßteil aus Stahl oder als Schweißkonstruktion aus Flachmaterial.

Der Ausdruck "Innenecke" besagt, daß die freien Schenkel der Profilstange und der Arme des Eckverbinder so angeordnet sind, daß ein außerhalb eines kubusförmigen mit der erfindungsgemäßen Eckverbindung hergestellten Gehäuses stehender Betrachter einer Eckkante von außen eine Innenecke vor sich sieht. Allerdings kann die Verbindung zwischen den die Innenecke bildenden Schenkeln frei konturiert werden, also z.B. zusammen mit den Schenkeln zu einer vollständigen, eckigen Innenecke, einer gerundeten Innenecke oder einer abgeschrägten Innenecke ausgebildet sein. Als zwei freie Schenkel und Innenecke kann man auch die Enden eines Halbkreises bezeichnen, so daß die Schenkel nicht unbedingt geradlinig sondern auch bogenförmig sein können. Der Kernpunkt ist, daß zwei freie Schenkel beispielsweise zur Ausführung einer Punktschweißung oder zur Bildung einer einfachen Verschraubung mit Hilfe von Durchgangslöchern frei zugänglich sind.

Für Klimaschränke und alle sonstigen Konstruktionen, wo eine thermische Isolierung gewünscht wird, ist nach einer erfindungsgemäßen Weiterbildung vorgesehen, daß Deckelflansche an den Profilstangen als Hohlkammern ausgeformt sind. Sonst ist erfindungsgemäß vorteilhaft, Seitenstreifen der Profilstangen als Deckelflansche umzubiegen. Je nach Profilstangenform können die Seitenstreifen auch doppellagig sein.Die Endabkantungen der Profilstangen können je nach Deckeltiefe verschieden sein.

Nachfolgend werden Ausführungsbeispiele der Erfindung, die in der Zeichnung dargestellt sind, näher erläutert. In der Zeichnung zeigen:

Fig. 1 Eine Darstellung einer nach dem Beispiel der Erfindung gestalteten Profilstange im Querschnitt;

Fig. 2 eine perspektivische Ansicht eines erfindungsgemäßen Eckverbinders als Beispiel;

Fig. 3 eine Außenansicht eines quaderförmigen Gestells unter Benutzung einer erfindungsgemäßen Eckverbindung;

Fig. 4 - 7 perspektivische Ansichten von verschieden ausgebildeten Profilstangen.

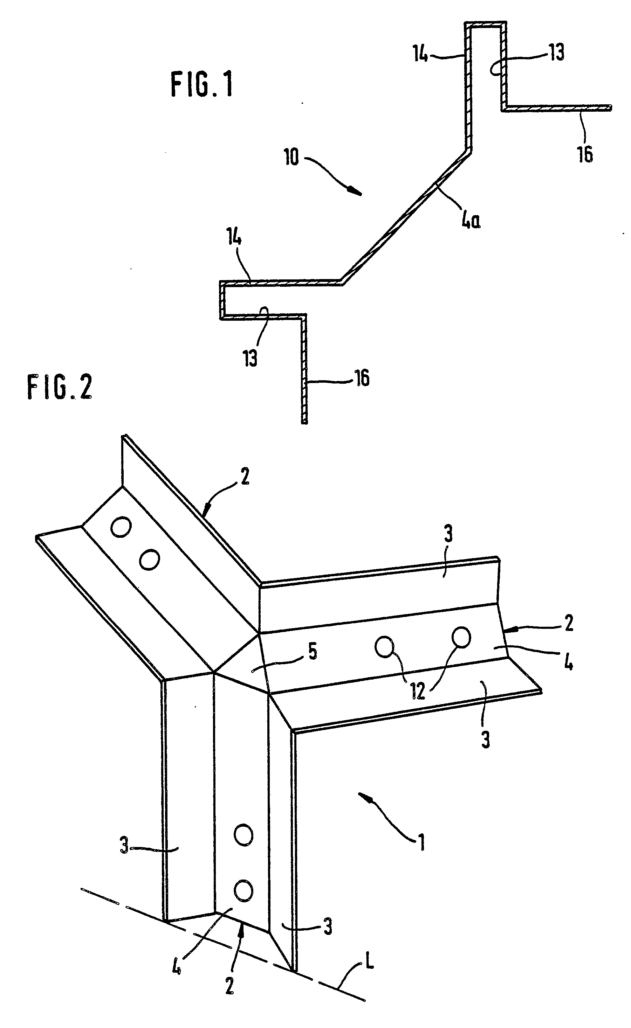

In Fig. 1 ist eine vorzugsweise aus Stahlblech hergestellte Profilstange 10 dargestellt, die in erfindungsgemäßer Ausbildung zwei unter einem Winkel von 90° zueinander stehende freie Schenkel 14 mit schlitzförmigen Aufnahmen 13 und von den freien Schenkeln 14 abgewinkelten Seitenstreifen 16 aufweist, die als Deckelauflieger bzw. Deckelflansche dienen. Zwischen den freien Schenkeln 14 liegt ein schräg abgewinkelter Abschnitt 4a. Beim Herstellen von Gestellen, Gehäusen etc. und den hierfür erforderlichen Eckverbindungen bildet die Oberfläche der Profilstange 10, aus die der Pfeil des Bezeugszeichens 10 hinweist, die Außenseite. Insofern bilden die freien Schenkel 14, von außen gesehen, eine "Innenecke".

In Fig. 2 ist ein Eckverbinder 1 gemäß der Erfindung wiedergegeben, der im wesentlichen aus drei aufeinander senkrecht stehenden Armen 2 gebildet ist. Jeder Arm 2 besteht aus zwei äußeren freien Schenkeln 3 und einem mittleren abgeschrägten Abschnitt 4, wobei die freien Schenkel 3 eines Armes 2 senkrecht zueinander stehen und der mittlere abgeschrägte Abschnitt 4 unter einem Winkel von 135° zu jedem benachbarten Schenkel 3 verläuft. Die freien Schenkel 3 benachbarter Arme 2 laufen im rechten Winkel aufeinander zu, während das Zentrum der abgeschrägten Abschnitte 4 von einer gleichseitigen Dreiecksplatte 5 gebildet ist. Jeder Arm 2 ist zur Mitte des abgeschrägten Abschnittes 4 symmetrisch ausgebildet.

Jeder Arm 2 ist insgesamt als Innenecke geformt, was dadurch zum Ausdruck kommt, daß jeder abgeschrägte mittlere Abschnitt 4 innerhalb einer Linie L liegt, die sich von Ecke zu Ecke der sich gegenüberliegenden freien Schenkel 3 erstreckt. An dem nach unten weisenden Arm 2 in Fig. 1 ist dies deutlich zu erkennen. Diese Anordnung weist den großen Vorteil einer einfachen Fügemöglichkeit der Arme 2 zu einem Eckverbinder 1 auf. Die sich berührenden Kanten der jeweiligen freien Schenkel 3 können zum Beispiel einfach durch Schweißen miteinander befestigt werden.

Die Dreiecksplatte 5 ist zur Bildung des Eckverbinders 1 nicht unbedingt erforderlich. Wenn später an dieser Stelle eine Öffnung in Kauf genommen wird, kann sie auch weggelassen werden. In der Regel ist jedoch schon aus Stabilitätsgründen der Eckverbinder 1 an dieser Stelle durch die genannte Dreiecksplatte 5 verschlossen. Sie bietet im übrigen eine günstige Anschraubfläche oder Anschweißfläche für Kranösen, Halteelemente oder sonstiges Zubehör. Sie kann also mit einer Gewindebohrung, mit profilierten Löchern oder mit aufgeschweißten Ösen versehen sein, was auf den jeweiligen Einzelfall ankommt.

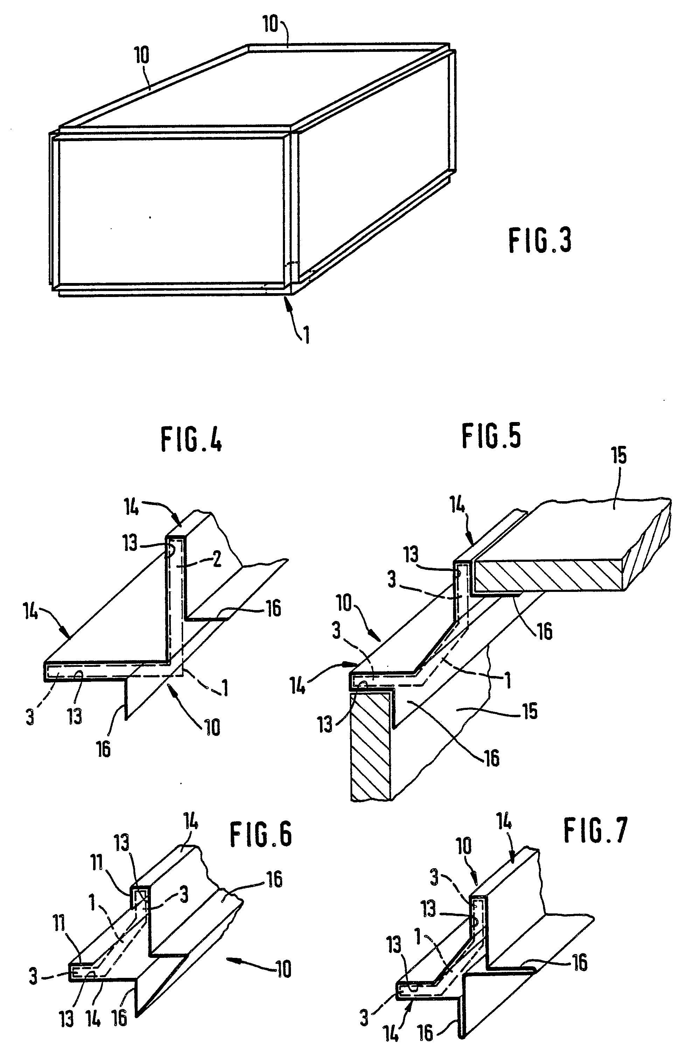

In Fig. 3 ist das Äußere eines quaderförmigen Gestells wiedergegeben, das mit Hilfe der im Querschnitt im wesentlichen L-förmigen Profilstangen 10 unter Benutzung eines Eckverbinders 1 mit entsprechend L-förmigen freien Schenkeln 3 der Arme 2 hergestellt ist. Aus Gründen der besseren Übersichtlichkeit sind die Seitenflächen als nicht durchsichtig wiedergegeben. Die als Inneneckform ausgebildeten Kanten sind deutlich zu erkennen.

In Fig 4 - 7 werden weitere Ausführungsbeispiele für Profilstangen 10 in Verbindung mit gestrichelt eingezeichneten Eckverbindern 1 wiedergegeben. Bei der nachfolgenden Beschreibung werden Teile gleicher Funktion nicht erneut beschrieben, um Wiederholungen zu vermeiden.

In Fig. 4 ist für die Profilstange 10 ein besonders einfaches Profil mit rechtwinklig aufeinander stehenden Schenkeln 14 mit schlitzförmigen Aufnahmen 13 wiedergegeben, wobei wieder Deckelauflieger als Seitenstreifen 16 an der Profilstange 10 angeformt sind. Die mit Fig. 1 identische Form der Profilstange 10 nach Fig. 5 zeigt, daß eine vollständige Anlage an dem Eckverbinder 1 über den gesamten Profilumfang nicht unbedingt erforderlich ist. Zur Veranschaulichung eines Gehäuseaufbaus sind hier beispielhaft für alle Ausführungsbeispiel an die freien Schenkel 14 anschließende Seitenwände bzw. Deckel 15, vorzugsweise bündig mit den Schenkeln 14 abschließend und an diesen und/oder den Seitenstreifen bzw. Deckelaufliegern 16 befestigt, eingezeichnet. Die Seitenwände können auch an den Schenkeln 14 befestigt werden, bedingt durch die erfindungsgemäße Innenecke.

Die in Fig. 6 wiedergegebene Profilstange 10 weist L-förmige Aufnahmen 13 auf, die mit Umbiegungen 11 Schlitzform erhalten können. Zur Bildung von Seitenstreifen 16 ist ein nach außen hin offener Profilzug vorhanden, in den z.B. außer dem Eckverbinder 1 mit Gewindelöchern versehene Gleitsteine eingeführt werden können.

Das in Fig. 7 wiedergegebene Ausführungsbeispiel für eine Profilstange 10 zeichnet sich dadurch aus, daß der Profilzug unter Einschluß der schlitzförmigen Aufnahmen 13 geschlossen ist.

Bei den vorangehend beschriebenen Ausführungsbeispielen handelt es sich außer in Fig. 7 um offene Profile. Derartige Profilstangen 10 können labil gegenüber Torsionsbeanspruchungen sein. Es kann deshalb in regelmäßigen Abständen oder nach Bedarf eine Einlage in die Profilstange 10 eingeschoben und beispielsweise durch Punktschweißen befestigt werden, die einem Abschnitt eines Arms des Eckverbinders 1 entspricht. Diese Querschnittsform ist ohnehin für eine gute Anschmiegung an die Profilstange 10 ausgebildet, so daß sich sehr günstige Befestigungsmöglichkeiten ergeben.

Alle Bauteile, also jede Profilstange 10, jeder Eckverbinder 1, bestehen in der Regel aus Stahl bzw. Stahlblech. Aber auch Verbundwerkstoffe, insbesondere bei den Eckverbindern, sind unter Umständen vorteilhaft, um glatte Übergänge von Profilstangen zu erhalten.

**Ansprüche**

1. Profilstange und Eckverbinder sowie damit herstellbare Eckverbindung zur Bildung von Gestellen, Gehäusen und Regalen, wobei an jedem Arm der drei oder mehr Arme eines Eckverbinders eine Profilstange befestigbar ist, dadurch **gekennzeichnet**, daß die Profilstange (10) zur Bildung einer Inneneckform mit zwei freien Schenkeln (14) versehen ist, die einen Winkel von weniger als 180°, vorzugsweise 90° bilden, wobei die freien Schenkel (14) zwei schlitzförmige Aufnahmen (13) aufweisen, in die der jeweilige Arm (2) des Eckverbinders (1) mit zwei freien Schenkeln (3) formschlüssig sowie punktschweißfähig einsteckbar ist, wobei nach dem Einstecken die Arme (2) des Eckverbinders (1) mindestens teilweise von der Profilstange (10) umschlossen sind.

2. Profilstange, Eckverbinder und damit herstellbare Eckverbindung, dadurch **gekennzeichnet**, daß sich zwischen den freien Schenkeln (14) der Profilstange (10) und ebenso zwischen den freien Schenkeln (3) jedes Arms (2) des Eckverbinders (1) ein die Schenkel (3) verbindender schräger Abschnitt (4;4a) mit Löchern oder Bohrungen bzw. Gewindebohrungen (12) für eine lösbare Befestigung zwischen der Profilstange (10) und dem Eckverbinder (1) befindet.

3. Profilstange, Eckverbinder und damit herstellbare Eckverbindung nach Anspruch 1 oder 2, dadurch **gekennzeichnet**, daß Seitenstreifen (16) der Profilstangen (10) als Deckelflansche bzw. Deckelauflieger umgebogen sind.

4. Profilstange, Eckverbinder und damit herstellbare Eckverbindung nach Anspruch 3, dadurch **gekennzeichnet**, daß die Deckelflansche der Profilstangen (10) als Hohlkammern ausgeformt sind.

5. Profilstange, Eckverbinder, und damit herstellbare Eckverbindung nach einem oder mehreren der vorhergehenden Ansprüche, dadurch **gekennzeichnet**, daß die Eckverbinder (1) aus Stahlblech in dem Bereich, der nicht von der Profilstange (10) umgeben ist, für einen glatten Übergang von Profilstange (10) und Eckverbinder (1) einen Auftrag aus Kunststoff od. dgl. haben.

FIG.1

FIG.2

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 129 903 (SCHMOELZ) * Seite 2, Zeilen 44-109; Figur 1 * --- | 1,3,4 | F 16 B 12/50 A 47 B 47/03 |
| X | FR-A-2 100 069 (CLIVE INVESTMENTS PTY) * Seite 7, Zeilen 12-19; Ansprüche 1,2; Figuren 13,14,16 * --- | 1,2 | |
| A | US-A-3 749 343 (MARSCHAK) --- | | |
| A | CH-A- 410 530 (SCHWEIZERISCHE ALUMINIUM) ----- | | |

**RECHERCHIERTE SACHGEBIETE (Int. Cl.4)**

F 16 B
A 47 B
A 47 F

Der vorliegende Recherchenbericht wurde für alle Patentansprüche erstellt

| Recherchenort | Abschlußdatum der Recherche | Prüfer |
|---|---|---|
| DEN HAAG | 12-10-1988 | SCHMITTER BERNARD |